# FASCICULE DE BREVET EUROPEEN

(11) **EP 3 014 676 B1**
(45) Date de publication et mention de la délivrance du brevet: **11.10.2017**
(21) Numéro de dépôt: 14739707.9
(22) Date de dépôt: 26.06.2014
(51) Int. Cl.: H01M 2/10, H01M 10/613, H01M 10/615, H01M 10/625, H01M 10/647, H01M 10/6557, H01M 10/6571, H01M 10/6567

(54) **BANDE DE CELLULES ÉLECTROCHIMIQUES POUR RÉALISER UN MODULE DE BATTERIE POUR VÉHICULE ÉLECTRIQUE OU HYBRIDE, ET PROCÉDÉ DE RÉALISATION D'UN TEL MODULE**
STREIFEN AUS ELEKTROCHEMISCHEN ZELLEN ZUR HERSTELLUNG EINES BATTERIEMODULS FÜR EIN ELEKTRO- ODER HYBRIDFAHRZEUG UND VERFAHREN ZUR HERSTELLUNG VON SOLCH EINEM MODUL
STRIP OF ELECTROCHEMICAL CELLS FOR THE PRODUCTION OF A BATTERY MODULE FOR AN ELECTRIC OR HYBRID VEHICLE, AND METHOD FOR THE PRODUCTION OF SUCH A MODULE

(30) Priorité: 27.06.2013 FR 1356203
(43) Date de publication de la demande: 04.05.2016
(73) Titulaire: Valeo Systemes Thermiques, 78321 Le Mesnil Saint Denis Cédex (FR)
(72) Inventeur: ELLIOT, Gilles, F-91080 Courcouronnes (FR); FEUILLARD, Vincent, F-78320 Le Mesnil Saint Denis (FR)
(74) Mandataire: Metz, Gaëlle
(86) Numéro de dépôt international: PCT/EP2014/063627
(87) Numéro de publication internationale: WO 2014/207168

(56) Documents cités:
- WO-A2-03/071616
- US-A1- 2011 151 300
- US-A1- 2012 094 165
- US-A1- 2013 101 881
- US-A1- 2013 209 847

## Description

L'invention concerne principalement un système de cellules électrochimiques destiné à réaliser un module de batterie pour véhicule électrique ou hybride. Un système similaire est connu du document US 2013/0101881 A1. L'invention porte également sur un procédé de réalisation d'un tel module à partir d'un tel système.

Le domaine technique de l'invention concerne les sources d'énergie à stockage électrochimique comprenant plusieurs cellules électrochimiques connectées en série. Ces sources d'énergie s'appliquent notamment aux batteries électriques pour assurer la traction des véhicules électriques ou hybrides.

Une batterie comprend un assemblage de modules, eux-mêmes comprenant un assemblage de cellules électrochimiques.

Dans ces cellules ont lieu des réactions électrochimiques réversibles permettant de produire du courant lors de la décharge de la batterie, ou de stocker l'énergie lorsque la batterie est en charge. Les batteries de type lithiumion sont particulièrement connues.

Les cellules électrochimiques peuvent être de type cylindrique, prismatique ou souple. Dans la technologie des cellules souples, communément appelée « pouch-cells », chaque cellule comprend une plaque métallique intégrant une électrode positive, une électrode négative et un séparateur. Chaque cellule comporte également une borne positive et une borne négative qui sont chacune respectivement reliées à la borne négative et à la borne positive des cellules adjacentes.

Pour réaliser un module de batterie, les cellules souples sont empilées les unes sur les autres. L'empilement doit être réalisé de façon que les cellules électrochimiques se juxtaposent précisément et dans un sens précis selon que l'empilement est dit simple, c'est-à-dire que les bornes positives et négatives des cellules sont toutes situées d'un même coté du module, ou selon que l'empilement est dit en quinconce, c'est-à-dire que les bornes positives et négatives des cellules sont en opposition. Cette empilement nécessite ainsi une main d'oeuvre qualifiée et engendre un temps de montage non négligeable.

Par ailleurs, les charges et les décharges de la batterie provoquent une production de chaleur qui peut conduire à la détérioration des cellules.

Or la constitution d'un module de batterie pourvu d'un échangeur de chaleur peut s'avérer complexe en raison de la double problématique de la réalisation de l'empilement des cellules et de l'adjonction de l'échangeur de chaleur.

Dans ce contexte, la présente invention vise en premier lieu un système permettant de réaliser un module de batterie de façon simple avec un temps de montage limité.

L'invention vise en outre un tel système permettant de réaliser un module de batterie pourvu d'un échangeur de chaleur.

A cet effet, le système de cellules électrochimiques de l'invention selon la revendication 1 est essentiellement caractérisé en ce qu'il comporte au moins une bande de support sur la surface de laquelle est disposée au moins une cellule électrochimique, la bande de support étant apte à pouvoir être coupée et pliée.

De cette façon, la bande de support peut avantageusement être pliée de manière à pouvoir permettre l'accolement des cellules électrochimiques entre elles et de réaliser un empilement des cellules les unes sur les autres. La bande de support présente une alternance de premières zones sur la surface de chacune desquelles est disposée au moins une cellule électrochimique, et de secondes zones dépourvues de cellules électrochimiques, la bande de support étant apte à pouvoir être pliée au niveau de ces secondes zones. La bande de support comporte sur au moins l'une de ses faces du coté d'une cellule électrochimique, une nappe chauffante en appui de contact surfacique contre la bande de support, laquelle nappe chauffante est ainsi prise en sandwich entre une cellule et la première zone correspondante de la bande de support. Selon une variante d'exécution, la bande de support peut être découpée de façon à ce que sa longueur et le nombre de cellules électrochimiques disposées sur sa surface soient adaptés pour obtenir la puissance batterie nécessaire.

Le système de l'invention peut également comporter les caractéristiques optionnelles suivantes considérées isolément ou selon toutes les combinaisons techniques possibles :
- préférentiellement, l'intégralité de la bande de support peut être coupée et/ou pliée avant la mise en place des cellules électrochimiques ;
- de cette manière, les cellules électrochimiques peuvent être disposées à tout endroit sur la surface de la bande de support, les parties de la bande de support sur lesquelles les cellules électrochimiques sont disposées constituant les premières zones, les secondes zones étant définies par les parties de la bande de support sur lesquelles aucune cellule électrochimique n'est disposée ;

- chaque seconde zone de la bande de support a une longueur et des propriétés de souplesse permettant de conférer à la bande de support la forme d'un serpentin comprenant une succession d'épingles ;
- chaque épingle comprenant :
   - deux premières zones de la bande de support sensiblement parallèles ;
   - une portion de jonction en arc de cercle correspondant à une seconde zone de la bande support, cette portion de jonction reliant les deux premières zones de la bande de support ;
- au moins un conduit de circulation de fluide s'étendant entre une entrée et une sortie de fluide, est ménagé dans l'épaisseur de la bande de support qui forme alors une bande de refroidissement ;
   de cette manière, le conduit de circulation de fluide est disposé au plus près de la cellule électrochimique à refroidir ;
- préférentiellement, chaque première zone de la bande de support est prise en sandwich entre deux cellules électrochimiques disposées chacune sur la surface d'une face extérieure de ladite première zone, chaque première zone de la bande de support formant une unité de doubles cellules ;
- chaque seconde zone de la bande de support a une longueur et des propriétés de souplesse permettant de conférer à la bande de support la forme d'un serpentin comprenant une succession d'épingles ;
- chaque épingle comprenant :
   - deux unités de doubles cellules sensiblement parallèles comprenant chacune une première zone de la bande de support prise en sandwich entre deux cellules électrochimiques ;
   - une portion de jonction en arc de cercle correspondant à une seconde zone de la bande support, cette portion de jonction reliant lesdites deux unités de doubles cellules de la bande de support ;
- au moins l'une des deux cellules d'une unité de doubles cellules comprend au niveau de sa face opposée à la première zone de la bande de support une plaque élastique, l'alternance de cellules munies d'une plaque élastique et de cellules dépourvues de plaque élastique permettant de positionner au moins une plaque élastique entre deux cellules en appui de contact l'une contre l'autre de deux unités de doubles cellules adjacentes et accolées après pliage de la seconde zone concernée de la bande de support ;
   - la face externe opposée à la première zone de la bande de support des deux cellules de chaque unité de doubles cellules comporte une plaque élastique.
   - la plaque élastique est une plaque en mousse.
   - la bande de refroidissement comporte deux nappes chauffantes en appui de contact surfacique contre les faces opposées de ladite bande de support, lesquelles nappes chauffantes sont ainsi prises en sandwich entre une cellule et la première zone correspondante de la bande de support ;
   - la bande de support et la nappe chauffante sont réalisées en une seule pièce ;
   - chaque nappe chauffante intègre un élément de liaison électrique permettant de relier en série les cellules électrochimique situées d'un même coté de la bande de support ;
   - plusieurs conduits de circulation de fluide sont ménagés dans l'épaisseur de la bande de support ;
   - la bande de support comporte plusieurs bandes de support parallèles dans l'épaisseur de chacune desquelles est ménagé au moins un conduit de circulation de fluide qui s'étend entre une entrée et une sortie de fluide.

L'invention porte également sur un procédé selon la revendication 14 de réalisation d'un module de cellules électrochimiques qui est essentiellement caractérisé en ce que qu'il comprend au moins les étapes de :
- réalisation du système tel que précédemment décrit ; et
- pliage en accordéon de la bande de support autour de chacune des secondes zones,
   ce dont il résulte l'accolement des cellules électrochimiques entre elles et la réalisation d'un empilement de cellules.

Avantageusement, préalablement au pliage en accordéon, il est procédé à la découpe du système de cellules au niveau d'une seconde zone de la bande de support selon le nombre de cellules requises dans le module de batterie visé.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une vue en coupe transversale éclatée d'une unité de doubles cellules du système de l'invention selon une première variante,
- la figure 2 est une vue en coupe transversale d'une unité de doubles cellules du système de l'invention selon la première variante,
- la figure 3 est une représentation schématique en perspective du système de cellules électrochimiques de l'invention selon une seconde variante,
- la figure 4 est une vue de dessus du système de cellules électrochimiques de l'invention selon les première et seconde variantes représenté en position de semi-montage du module de batterie,
- la figure 5 est une représentation schématique en perspective du module de batterie réalisé à partir du système de cellules électrochimiques de l'invention selon la seconde variante de réalisation,
- la figure 6 une vue de dessus du système de cellules électrochimiques de l'invention selon une troisième variante représenté en position de semi-montage du module de batterie, et
- la figure 7 une vue de dessus du système de cellules électrochimiques de l'invention selon une quatrième variante représenté en position de semi-montage du module de batterie.

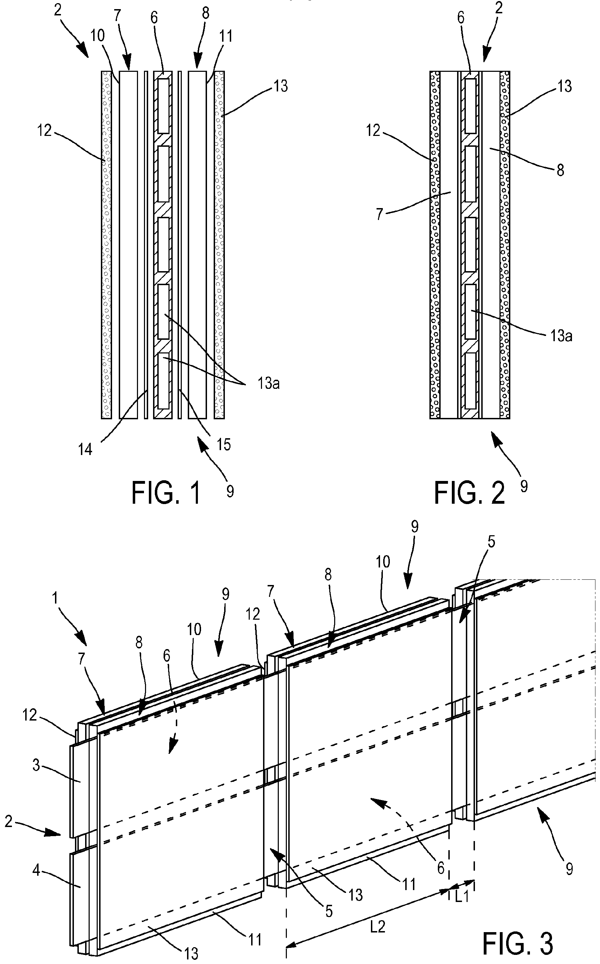

En référence à la figure 3, le système de cellules électrochimiques de l'invention 1 comprend une bande de support 2 réalisée en plastique souple et comprend dans cette variante deux bandes parallèles 3,4 dont la structure sera décrite plus loin.

La bande de support 2 comprend une alternance de deuxièmes zones 5 de longueur L1 et de premières zones 6 de longueur L2 supérieure à la longueur L1. Chaque première zone 6 est prise en sandwich entre deux cellules électrochimique 7,8 en constituant ainsi une unité de doubles cellules 9. Le système de l'invention 1 comprend ainsi une alternance d'unités de doubles cellules 9 et de deuxièmes zones 5 de la bande de support 2 reliant chaque unité de doubles cellules 9 à l'unité adjacente 9.

Par ailleurs, chaque cellule 7,8 comprend sur sa face opposée 10,11 à la première zone 6, une plaque de mousse 12,13 dont la fonctionnalité au sein du module de batterie sera décrite plus loin.

En référence aux figures 1 et 2, chaque unité de doubles cellules 9 comprend dans sa partie centrale la première zone 6 de la bande de support 2. Dans cette variante, la bande de support 2 comprend une bande unique et comprend cinq conduits de circulation de fluide 13a ménagés dans son épaisseur et reliés chacun à une entrée et une sortie de fluide non représentées sur ces figures. En variante, il est possible de ne prévoir qu'une seule entrée de fluide et qu'une seule sortie de fluide pour ces cinq conduits qui seraient reliés entre eux par des jonctions courbées au niveau des extrémités de la bande de support 2.

De façon générale, il est avantageux que le sens de circulation du fluide dans les cinq conduits de circulation de fluide 13a soit opposé pour au moins certains de ces conduits, de façon à homogénéiser le refroidissement de chaque cellule 7,8.

La première zone 6 de la bande de support 2 est, comme déjà décrite en référence à la figure 3, prise en sandwich entre deux cellules électrochimiques 7,8 dont les faces opposées 10,11 à la bande de support 2 sont recouvertes d'une plaque de mousse 12,13.

Par ailleurs, selon cette variante de réalisation, la bande de support 2 comprend deux nappes chauffantes 14,15 accolées à ses faces opposées. Ainsi, chaque nappe chauffante 14,15 est prise en sandwich entre une cellule électrochimique 7,8 et la première zone 6 de la bande de support 2.

Cette nappe chauffante 14,15 permet de chauffer les cellules 7,8 lorsque le module de batterie est utilisé dans des conditions climatiques froides.

Par ailleurs et bien que non visible sur les figures 1 et 2, il est possible de prévoir que les nappes chauffantes 14,15 intègrent des éléments de liaison électriques permettant de relier les cellules électrochimiques 7,8 situées d'un même coté de la bande de support 2. Dans cette configuration, les cellules 7,8 du module seront en outre reliées en parallèle par des moyens non représentés mais connus de l'homme du métier.

Avantageusement, la bande de support 2 et les nappes chauffantes 14,15 sont réalisées en une seule pièce.

Tous les éléments constituant chaque unité de doubles cellules 9, soit la première zone 6 de la bande de support 2, les nappes chauffantes 14,15, les cellules électrochimiques 7,8 et les plaques de mousse 12,13, sont en appui de contact surfacique les uns contre les autres.

On décrit à présent les étapes de réalisation d'un module de batterie à partir du système de cellules électrochimiques de l'invention 1.

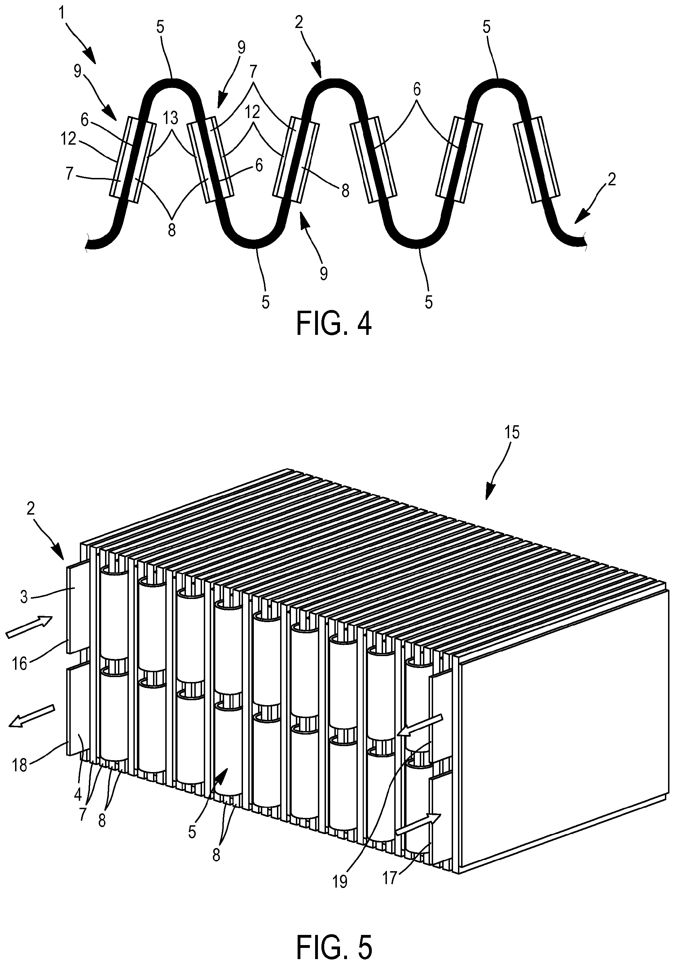

En référence à la figure 4, la réalisation du module s'effectue par un pliage en accordéon du système de cellules électrochimiques 1. Plus précisément, chaque deuxième zone 5 de la bande de support 2 est pliée dans le sens inverse de la deuxième zone adjacente 5 et ce, sur toute la longueur du système de cellules électrochimiques 1.

Par ce pliage en accordéon, ainsi que par la longueur constante L1 de chaque deuxième zone de pliage 5 et la longueur constante L2 de chaque première zone 6, chaque unité de doubles cellules 6 est placée en regard de l'unité de doubles cellules adjacentes 6. Ce pliage est réalisé jusqu'à ce que les unités de doubles cellules adjacentes 6 soient toutes accolées les unes aux autres.

Comme représenté sur la figure 5, il en résulte l'empilement des unités de doubles cellules 9 et par là même, l'empilement de toutes les cellules électrochimiques en constituant ainsi un module de batterie 15.

Dans cette empilement, les plaques de mousse 12,13 sont disposées entre les deux cellules 7,7 ; 8,8 situées entre deux premières zones 6 adjacentes. Les plaques de mousse 12,13 permettent de plaquer les cellules 7,8 contre la bande de refroidissement et d'absorber les dilatations importantes des cellules résultant de variations thermiques.

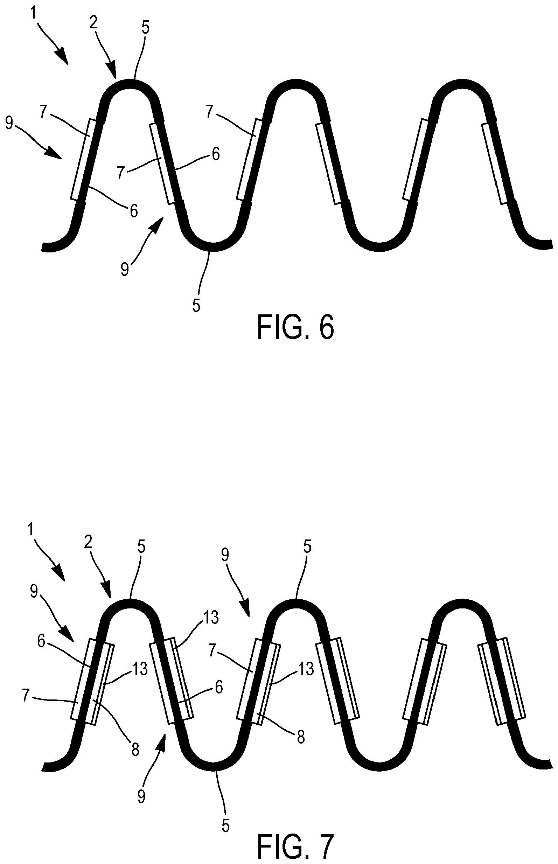

En référence à la figure 7, chaque cellule de l'empilement 7,8 peut être isolée de sa cellule adjacente 7,8 par une unique plaque de mousse 13. Pour ce faire, chaque unité de doubles cellules 9 ne comprend qu'une plaque de mousse 13 accolée sur une seule de deux cellules 8. Selon la figure 7, seules les cellules 8 disposées d'un côté de la bande de support 2 comprennent une plaque de mousse 13. Mais on peut prévoir une autre répartition des plaques de mousse 13 par réalisation d'une alternance particulière de cellules comprenant une plaque de mousse 12,13 et de cellules dépourvues de plaque de mousse.

Par ailleurs, on peut prévoir la mise en oeuvre d'un système de cellules électrochimiques 2 tel que décrit précédemment, comprenant un grand nombre d'unité de doubles cellules 9. Selon le nombre de cellules nécessaire à la constitution d'un module en particulier 15, une opération de découpage du système de cellules 1 au niveau d'une seconde zone 5 de la bande de support 2 délimitant le nombre de cellules nécessaires sera réalisée avant d'effectuer le pliage de la bande de support 2.

Sur la variante représentée sur la figure 5 correspondant au système de cellule 1 de la figure 3, la bande de support 2 comprend deux bandes de support 3, 4 qui constituent chacune un circuit de circulation de fluide indépendant 3,4. Chaque conduit de circulation de fluide 3, 4 s'étend depuis une entrée de fluide 16,17 jusqu'à une sortie de fluide 18,19 reliés à un circuit d'eau du véhicule. Les entrées 16,17 et les sorties de fluides 18,19 sont disposées de façon opposée par rapport au module 15, ce dont il résulte une circulation inversée de fluide dans le premier conduit de circulation de fluide 3 par rapport au second conduit 4, et une répartition homogène de la fraicheur dissipée dans chaque cellule 7,7 du module 15.

En restant dans le cadre de l'invention et en référence à la figure 6, il est possible de prévoir que la bande de support 2 ne comprend pas de conduit de circulation dans son épaisseur. Dans ce cas, la bande de support 2 forme une bande de liaison 2 assurant la liaison mécanique entre les cellules et permettant le montage facile et rapide d'un module de batterie tel que décrit et représenté en référence aux figures 4 et 5. Un élément d'échange thermique supplémentaire pourra être ajouté au module de batterie.

Par ailleurs, il est également possible de ne prévoir la présence que d'une seule cellule 7 par unité de cellules 9.

Dans ce cas, et lorsque la bande 2 forme une bande de refroidissement 2, chaque cellule 7 est au contact de deux premières zones 6 de la bande de support 2 lors de la réalisation de l'empilement.

Ainsi, selon l'invention, la bande 2, qu'elle forme bande de refroidissement 2 ou uniquement bande de liaison 2, permet la réalisation, par une seule opération de pliage, d'un module de batterie de cellules souples. Le système de cellules 1 peut être préalablement découpé selon le nombre de cellules du module à réaliser.

Lorsque la bande 2 forme bande de support 2, cette dernière présente une double fonction de liaison mécanique des cellules et d'élément de refroidissement de ces cellules.

Enfin, il est possible d'insérer dans les unités de doubles cellules 9 une liaison électrique ainsi qu'une nappe chauffante, ou encore tout autre élément pouvant être nécessaire au fonctionnement ou à l'optimisation des cellules du module de batterie.

## Revendications

1. Système de cellules électrochimiques pour réaliser un module de batterie pour véhicule électrique ou hybride comportant un empilement de cellules électrochimiques souples, comportant au moins une bande de support (2) sur la surface de laquelle sont disposées plusieurs cellules électrochimiques (7, 8), la bande de support (2) étant apte à pouvoir être pliée de manière à pouvoir permettre l'accolement des cellules électrochimiques (7, 8) entre elles et de réaliser un empilement des cellules (7, 8) les unes sur les autres, la bande de support (2) présentant une alternance de premières zones (6) sur la surface de chacune desquelles est disposée au moins une cellule électrochimique (7, 8), et de secondes zones (5) dépourvues de cellules électrochimiques (7, 8), la bande de support (2) étant apte à pouvoir être pliée au niveau de ces secondes zones (5), **caractérisé en ce que** la bande de support (2) comporte sur au moins l'une de ses faces du coté d'une cellule électrochimique (7,8), une nappe chauffante (14,15) en appui de contact surfacique contre la bande de support (2), laquelle nappe chauffante (14,15) est ainsi prise en sandwich entre une cellule (7,8) et la première zone correspondante (6) de la bande de support (2).

2. Système selon la revendication 1, **caractérisé en ce que** chaque seconde zone (5) de la bande de support (2) a une longueur et des propriétés de souplesse permettant de conférer à la bande de support (2) la forme d'un serpentin comprenant une succession d'épingles, chaque épingle comprenant :
- deux premières zones (6) de la bande de support (2) sensiblement parallèles ;
- une portion de jonction en arc de cercle correspondant à une seconde zone (5) de la bande de support (2), cette portion de jonction reliant les deux premières zones (6) de la bande de support (2).

3. Système selon l'une des revendications 1 à 2, **caractérisé en ce qu'**au moins un conduit de circulation de fluide (3, 4 ; 13a) s'étendant entre une entrée (16, 17) et une sortie de fluide (18, 19), est ménagé dans l'épaisseur de la bande de support (2) qui forme alors une bande de refroidissement (2).

4. Système selon l'une des revendications 1 à 3, **caractérisé en ce que** chaque première zone (6) de la bande de support (2) est prise en sandwich entre deux cellules électrochimiques (7, 8) disposées chacune sur la surface d'une face extérieure de ladite première zone (6), chaque première zone (6) de la bande de support (2) formant une unité de doubles cellules (9).

5. Système selon la revendication 4, **caractérisé en ce que** chaque seconde zone (5) de la bande de support (2) a une longueur et des propriétés de souplesse permettant de conférer à la bande de support (2) la forme d'un serpentin comprenant une succession d'épingles, chaque épingle comprenant deux unités de doubles cellules (9) sensiblement parallèles comprenant chacune une première zone (6) de la bande de support (2) prise en sandwich entre deux cellules électrochimiques (7, 8) et une portion de jonction en arc de cercle correspondant à une seconde zone (5) de la bande support (2), cette portion de jonction reliant lesdites deux unités de doubles cellules (9) de la bande de support (2).

6. Système selon l'une des revendications 4 et 5, **caractérisé en ce qu'**au moins l'une (7,8) des deux cellules (7,8) d'une unité de doubles cellules (9) comprend au niveau de sa face opposée (10,11) à la première zone (6) de la bande de support (2) une plaque élastique (12,13), l'alternance de cellules (7,8) munies d'une plaque élastique (12,13) et de cellules (7,8) dépourvues de plaque élastique (12, 13) permettant de positionner au moins une plaque élastique (12,13) entre deux cellules en appui de contact l'une contre l'autre (7,8) de deux unités de doubles cellules (9) adjacentes et accolées après pliage de la seconde zone concernée (5) de la bande de support (2).

7. Système selon l'une des revendications 4 à 6, **caractérisé en ce que** la face externe opposée (10,11) à la première zone (6) de la bande de support (2) des deux cellules (7,8) de chaque unité de doubles cellules (9) comporte une plaque élastique (12,13).

8. Système selon la revendication 6, **caractérisé en ce que** la plaque élastique (12,13) est une plaque en mousse.

9. Système selon l'une quelconque des revendications 1 à 8, **caractérisé en ce que** la bande de support (2) comporte deux nappes chauffantes (14,15) en appui de contact surfacique contre les faces opposées de la dite bande de support (2), lesquelles nappes chauffantes (14,15) sont ainsi prises en sandwich entre une cellule (7,8) et la première zone correspondante (6) de la bande de support (2).

10. Système selon l'une quelconque des revendications 1 à 9, **caractérisé en ce que** la bande de support (2) et la nappe chauffante (14,15) sont réalisées en une seule pièce.

11. Système selon l'une quelconque des revendications 1 à 10, **caractérisé en ce que** chaque nappe chauffante (14,15) intègre un élément de liaison électrique permettant de relier en série les cellules électrochimique (7,8) situées d'un même coté de la bande de support (2).

12. Système selon l'une quelconque des revendications 1 à 11, **caractérisé en ce que** plusieurs conduits de circulation de fluide (13a) sont ménagés dans l'épaisseur de la bande de support (2).

13. Système selon l'une quelconque des revendications 1 à 12, **caractérisé en ce que** la bande de support (2) comporte plusieurs bandes de support parallèles (3,4) dans l'épaisseur de chacune desquelles est ménagé au moins un conduit de circulation de fluide (3,4) qui s'étend entre une entrée (16,17) et une sortie (18,19) de fluide.

14. Procédé de réalisation d'un module de batterie pour véhicule électrique ou hybride comportant un empilement de cellules électrochimiques souples, **caractérisé en ce qu'**il comprend au moins les étapes de :
- réalisation du système selon l'une quelconque des revendications 1 à 13, et
- pliage en accordéon de la bande de support (2) autour de chacune des secondes zones (5),
ce dont il résulte l'accolement des cellules électrochimiques (7,8) entre elles et la réalisation d'un empilement de cellules (7,8).

15. Procédé selon la revendication 14, **caractérisé en ce que** préalablement au pliage en accordéon, il est procédé à la découpe du système de cellules (1) au niveau d'une seconde zone (5) de la bande de support (2) selon le nombre de cellules requises dans le module de batterie visé.

## Patentansprüche

1. System elektrochemischer Zellen zur Herstellung eines eine Stapelung biegsamer elektrochemischer Zellen aufweisenden Batteriemoduls für ein Elektro- oder Hybridfahrzeug, das mindestens einen Trägerstreifen (2) aufweist, an dessen Oberfläche mehrere elektrochemische Zellen (7, 8) angeordnet sind, wobei der Trägerstreifen (2) gebogen werden kann, um das Aneinanderfügen der elektrochemischen Zellen (7, 8) und die Herstellung einer Stapelung der Zellen (7, 8) übereinander zu erlauben, wobei der Trägerstreifen (2) eine Wechselfolge erster Zonen (6), an der Oberfläche von jeder von denen mindestens eine elektrochemische Zelle (7, 8) angeordnet ist, und zweiter Zonen (5) aufweist, die keine elektrochemischen Zellen (7, 8) haben, wobei der Trägerstreifen (2) im Bereich dieser zweiten Zonen (5) gebogen werden kann, **dadurch gekennzeichnet, dass** der Trägerstreifen (2) auf mindestens einer seiner Seiten auf der Seite einer elektrochemischen Zelle (7, 8) eine Heizlage (14, 15) in Oberflächenkontaktauflage gegen den Trägerstreifen (2) aufweist, wobei die Heizlage (14, 15) so sandwichartig zwischen einer Zelle (7, 8) und der ersten entsprechenden Zone (6) des Trägerstreifens (2) aufgenommen wird.

2. System nach Anspruch 1, **dadurch gekennzeichnet, dass** jede zweite Zone (5) des Trägerstreifens (2) eine Länge und Biegsamkeitseigenschaften hat, die es ermöglichen, dem Trägerstreifen (2) die Form einer Rohrschlange zu verleihen, die eine Folge von Haarnadeln enthält, wobei jede Haarnadel enthält:
- zwei im Wesentlichen parallele erste Zonen (6) des Trägerstreifens (2);
- einen kreisbogenförmigen Verbindungsabschnitt, der einer zweiten Zone (5) des Trägerstreifens (2) entspricht, wobei dieser Verbindungsabschnitt die zwei ersten Zonen (6) des Trägerstreifens (2) verbindet.

3. System nach einem der Ansprüche 1 bis 2, **dadurch gekennzeichnet, dass** mindestens eine Fluidzirkulationsleitung (3, 4; 13a), die sich zwischen einem Fluideingang (16, 17) und einem Fluidausgang (18, 19) erstreckt, in der Dicke des Trägerstreifens (2) ausgespart ist, der dann einen Kühlstreifen (2) bildet.

4. System nach einem der Ansprüche 1 bis 3, **dadurch gekennzeichnet, dass** jede erste Zone (6) des Trägerstreifens (2) zwischen zwei elektrochemischen Zellen (7, 8) sandwichartig aufgenommen wird, die je an der Oberfläche einer Außenseite der ersten Zone (6) angeordnet sind, wobei jede erste Zone (6) des Trägerstreifens (2) eine Einheit doppelter Zellen (9) bildet.

5. System nach Anspruch 4, **dadurch gekennzeichnet, dass** jede zweite Zone (5) des Trägerstreifens (2) eine Länge und Biegsamkeitseigenschaften hat, die es ermöglichen, dem Trägerstreifen (2) die Form einer eine Folge von Haarnadeln enthaltenden Rohrschlange zu verleihen, wobei jede Haarnadel zwei Einheiten im Wesentlichen paralleler doppelter Zellen (9) enthält, die je eine erste Zone (6) des Trägerstreifens (2), die zwischen zwei elektrochemischen Zellen (7, 8) sandwichartig aufgenommen wird, und einen kreisbogenförmigen Verbindungsabschnitt enthalten, der einer zweiten Zone (5) des Trägerstreifens (2) entspricht, wobei dieser Verbindungsabschnitt die zwei Einheiten von doppelten Zellen (9) des Trägerstreifens (2) verbindet.

6. System nach einem der Ansprüche 4 und 5, **dadurch gekennzeichnet, dass** mindestens eine (7, 8) der zwei Zellen (7, 8) einer Einheit von doppelten Zellen (9) im Bereich ihrer der erste Zone (6) des Trägerstreifens (2) gegenüberliegenden Seite (10, 11) eine elastische Platte (12, 13) enthält, wobei die Wechselfolge von mit einer elastischen Platte (12, 13) versehenen Zellen (7, 8) und von Zellen (7, 8) ohne elastische Platte (12, 13) es ermöglicht, mindestens eine elastische Platte (12, 13) zwischen zwei Zellen in Kontaktauflage gegeneinander (7, 8) von zwei Einheiten von doppelten Zellen (9) zu positionieren, die benachbart und nach dem Biegen der betroffenen zweiten Zone (5) des Trägerstreifens (2) aneinandergefügt sind.

7. System nach einem der Ansprüche 4 bis 6, **dadurch gekennzeichnet, dass** die der ersten Zone (6) des Trägerstreifens (2) der zwei Zellen (7, 8) jeder Einheit von doppelten Zellen (9) gegenüberliegende Außenseite (10, 11) eine elastische Platte (12, 13) aufweist.

8. System nach Anspruch 6, **dadurch gekennzeichnet, dass** die elastische Platte (12, 13) eine Schaumstoffplatte ist.

9. System nach einem der Ansprüche 1 bis 8, **dadurch gekennzeichnet, dass** der Trägerstreifen (2) zwei Heizlagen (14, 15) in Oberflächenkontaktauflage gegen die gegenüberliegenden Seiten des Trägerstreifens (2) aufweist, wobei die Heizlagen (14, 15) so zwischen einer Zelle (7, 8) und der ersten entsprechenden Zone (6) des Trägerstreifens (2) sandwichartig aufgenommen werden.

10. System nach einem der Ansprüche 1 bis 9, **dadurch gekennzeichnet, dass** der Trägerstreifen (2) und die Heizlage (14, 15) aus einem Stück hergestellt werden.

11. System nach einem der Ansprüche 1 bis 10, **dadurch gekennzeichnet, dass** jede Heizlage (14, 15) ein elektrisches Verbindungselement umfasst, das es ermöglicht, die auf der gleichen Seite des Trägerstreifens (2) befindlichen elektrochemischen Zellen (7, 8) in Reihe zu verbinden.

12. System nach einem der Ansprüche 1 bis 11, **dadurch gekennzeichnet, dass** mehrere Fluidzirkulationsleitungen (13a) in der Dicke des Trägerstreifens (2) ausgespart sind.

13. System nach einem der Ansprüche 1 bis 12, **dadurch gekennzeichnet, dass** der Trägerstreifen (2) mehrere parallele Trägerstreifen (3, 4) aufweist, in der Dicke von jeder von denen mindestens eine Fluidzirkulationsleitung (3, 4) ausgespart ist, die sich zwischen einem Fluideingang (16, 17) und einem Fluidausgang (18, 19) erstreckt.

14. Verfahren zur Herstellung eines Batteriemoduls für ein Elektro- oder Hybridfahrzeug, das eine Stapelung biegsamer elektrochemischer Zellen aufweist, **dadurch gekennzeichnet, dass** es mindestens die folgenden Schritte enthält:
- Herstellung des Systems nach einem der Ansprüche 1 bis 13, und
- Ziehharmonikafalten des Trägerstreifens (2) um jede der zweiten Zonen (5) herum,
woraus das Anfügen der elektrochemischen Zellen (7, 8) aneinander und die Herstellung einer Stapelung von Zellen (7, 8) resultieren.

15. Verfahren nach Anspruch 14, **dadurch gekennzeichnet, dass** vor der Ziehharmonikafaltung das Ausschneiden des Systems von Zellen (1) im Bereich einer zweiten Zone (5) des Trägerstreifens (2) gemäß der Anzahl von im anvisierten Batteriemodul erforderlichen Zellen durchgeführt wird.

## Claims

1. System of electrochemical cells for producing a battery module for an electric or hybrid vehicle comprising a stack of flexible electrochemical cells, comprising at least one support strip (2) on the surface of which are arranged a plurality of electrochemical cells (7, 8), the support strip (2) being able to be folded so as to be able to allow the electrochemical cells (7, 8) to be attached together and produce a stacking of the cells (7, 8), one on top of the other, the support strip (2) having an alternation of first zones (6) on the surface of each of which is arranged at least one electrochemical cell (7, 8), and of second zones (5) without any electrochemical cells (7, 8), the support strip (2) being able to be folded in these second zones (5), **characterized in that** the support strip (2) comprises, on at least one of its faces on the side of an electrochemical cell (7, 8), a heating ply (14, 15) bearing with surface contact against the support strip (2), said heating ply (14, 15) being thus sandwiched between a cell (7, 8) and the corresponding first zone (6) of the support strip (2).

2. System according to Claim 1, **characterized in that** each second zone (5) of the support strip (2) has a length and flexibility properties that make it possible to give the support strip (2) a serpentine form comprising a succession of hair pins, each hair pin comprising:
- two first zones (6) of the support strip (2) that are substantially parallel;
- a joining portion in the form of a circular arc corresponding to a second zone (5) of the support strip (2), this joining portion linking the two first zones (6) of the support strip (2).

3. System according to either one of Claims 1 and 2, **characterized in that** at least one fluid circulation duct (3, 4; 13), extending between a fluid inlet (16, 17) and a fluid outlet (18, 19), is formed in the thickness of the support strip (2) which then forms a cooling strip (2).

4. System according to one of Claims 1 to 3, **characterized in that** each first zone (6) of the support strip (2) is sandwiched between two electrochemical cells (7, 8) each arranged on the surface of an outer face of said first zone (6), each first zone (6) of the support strip (2) forming a double-cell unit (9).

5. System according to Claim 4, **characterized in that** each second zone (5) of the support strip (2) has a length and flexibility properties that make it possible to give the support strip (2) a serpentine form comprising a succession of hair pins, each hair pin comprising two substantially parallel double-cell units (9) each comprising a first zone (6) of the support strip (2) sandwiched between two electrochemical cells (7, 8) and a joining portion in the form of a circular arc corresponding to a second zone (5) of the support strip (2), this joining portion linking said two double-cell units (9) of the support strip (2).

6. System according to one of Claims 4 and 5, **characterized in that** at least one (7, 8) of the two cells (7, 8) of a double-cell unit (9) comprises, on its face opposite (10, 11) the first zone (6) of the support strip (2), an elastic plate (12, 13), the alternation of cells (7, 8) provided with an elastic plate (12, 13) and of cells (7, 8) without any elastic plate (12, 13) making it possible to position at least one elastic plate (12, 13) between two cells in bearing contact against one another (7, 8) of two double-cell units (9) that are adjacent and attached after folding of the relevant second zone (5) of the support strip.

7. System according to one of Claims 4 to 6, **characterized in that** the outer face (10, 11) opposite the first zone (6) of the support strip (2) of the two cells (7, 8) of each double-cell unit (9) comprises an elastic plate (12, 13).

8. System according to Claim 6, **characterized in that** the elastic plate (12, 13) is a foamed plastic plate.

9. System according to any one of Claims 1 to 8, **characterized in that** the support strip (2) comprises two heating plies (14, 15) bearing with surface contact against the opposite faces of said support strip (2), said heating plies (14, 15) being thus sandwiched between a cell (7, 8) and the corresponding first zone (6) of the support strip (2).

10. System according to any one of Claims 4 to 9, **characterized in that** the support strip (2) and the heating ply (14, 15) are produced in a single piece.

11. System according to any one of Claims 1 to 10, **characterized in that** each heating ply (14, 15) incorporates an electrical link element making it possible to link in series the electrochemical cells (7, 8) situated on one and the same side of the support strip (2).

12. System according to any one of Claims 1 to 11, **characterized in that** a number of fluid circulation ducts (13a) are formed in the thickness of the support strip (2).

13. System according to any one of Claims 1 to 12, **characterized in that** the support strip (2) comprises a number of parallel support strips (3, 4) in the thickness of each of which is formed at least one fluid circulation duct (3, 4) which extends between a fluid inlet (16, 17) and a fluid outlet (18, 19).

14. Method for producing a battery module for an electric or hybrid vehicle comprising a stacking of flexible electrochemical cells, **characterized in that** it comprises at least the steps of:
- producing the system according to any one of Claims 1 to 13, and
- accordion-folding the support strip (2) around each of the second zones (5),
from which results the attachment of the electrochemical cells (7, 8) together and the production of a stacking of cells (7, 8).

15. Method according to Claim 14, **characterized in that**, prior to the accordion-folding, the system of cells (1) is cut in a second zone (5) of the support strip (2) depending on the number of cells required in the resulting battery module.
